# EUROPÄISCHE PATENTSCHRIFT

(11) **EP 2 087 571 B1**
(45) Veröffentlichungstag und Bekanntmachung des Hinweises auf die Patenterteilung: **07.12.2016**
(21) Anmeldenummer: 07819073.3
(22) Anmeldetag: 17.10.2007
(51) Int. Cl.: H02J 3/40

(54) **UMRICHTER MIT STEUERBAREM PHASENWINKEL**
Converter with controllable phase-angle
converrisseur à dèphasage commandable

(30) Priorität: 24.10.2006 DE 102006050077
(43) Veröffentlichungstag der Anmeldung: 12.08.2009
(73) Patentinhaber: Senvion GmbH, 22297 Hamburg (DE)
(72) Erfinder: FORTMANN, Jens, 13156 Berlin (DE); LETAS, Heinz-Hermann, 23701 Süsel (DE)
(74) Vertreter: Glawe, Delfs, Moll
(86) Internationale Anmeldenummer: PCT/EP2007/009005
(87) Internationale Veröffentlichungsnummer: WO 2008/049541

(56) Entgegenhaltungen:
- EP-A- 1 168 566
- EP-A- 1 561 946
- US-A- 5 883 796
- US-A1- 2003 198 065

## Beschreibung

Die Erfindung betrifft einen Umrichter, insbesondere für Windenergieanlagen mit einem über einen Windrotor angetriebenen Generator, zum Einspeisen elektrischer Leistung in ein Netz, wobei der Umrichter einen Steuereingang für einen Phasenwinkel der an das Netz abgegebenen elektrischen Leistung aufweist.

Zur Einspeisung von elektrischer Leistung in ein Netz finden gerade bei dezentralen einspeisenden Kraftwerken zunehmend Umrichter Verwendung. Sie eignen sich insbesondere zur Verwendung mit drehzahlvariablen Generatoren, wie sie bei modernen Windenergieanlagen vorgesehen sind. Dabei ist zur Einspeisung des von dem Generator erzeugten frequenzvariablen Stroms eine Umrichtung auf die Frequenz des festfrequenten Versorgungsnetzes (üblicherweise 50 Hz) erforderlich. Bei Störungen im Netz kann es zu einem Sprung in der Phasenlage der Spannung kommen. Es hat sich gezeigt, dass Phasensprünge ähnlich negative Konsequenzen auf Umrichter haben können wie Spannungseinbrüche. Bei herkömmlichen Umrichtern kann es daher bei einem Phasensprung zu Überströmen kommen, wodurch Schutzeinrichtungen des Umrichters aktiviert werden, wie beispielsweise dessen Crowbar-Schaltung. Das Aktivieren der Schutzeinrichtungen ändert das Bremsmoment des Umrichters und des daran angeschlossenen Generators, wodurch unerwünschte Rückwirkungen auf den mechanischen Teil auftreten. Es können Drehmomentschwingungen am Generator und seinem Antriebsstrang entstehen, die zu erhöhtem Verschleiß oder gar zum Ausfall führen können. Es ist versucht worden, durch besondere Zusatzschaltungen ein Aktivieren der Schutzeinrichtungen des Umrichters zu vermeiden. So kann in einem Zwischenkreis des Umrichters ein Chopper vorgesehen sein, der aufgrund von Phasensprüngen auftretende Überspannungen beziehungsweise -ströme bereits im Zwischenkreis begrenzt. Die Zusatzschaltungen erhöhen jedoch den Herstellungsaufwand und verteuern damit den Umrichter. Zudem sind sie in ihrer Leistungsfähigkeit beschränkt, so dass sie bei hohen Leistungen häufig nicht ausreichen. Darüber hinaus kann ein häufiges Einschalten der Schutzeinrichtung aufgrund der Rückwirkungen auf die mechanische Komponenten der Windenergieanlage deren Lebensdauer verkürzen.

Die Patentveröffentlichung EP 1 168 566 A2 zeigt eine Lösung, bei der ein Phasensprung im Netz als Fehler erkannt wird. Als Antwort auf diesen Fehler wird der Umrichter so angesteuert, dass der Phasenwinkel des Umrichters mit dem des Netzes nach Phasensprung voll synchronisiert wird.

Die Schriften US 2003/0198065, EP 1 561 946 A2 und US 5,883,796 zeigen ebenfalls Lösungen, bei denen Umrichter bei Erkennung von Netzfehlern mit Phasenabweichungen diese ausregeln.

Der Erfindung liegt die Aufgabe zu Grunde, einen Umrichter beziehungsweise eine Windenergieanlage mit einem solchen Umrichter sowie ein Verfahren zum Betreiben anzugeben, mit denen ein besseres Verhalten bei Phasensprüngen im Netz erreicht wird.

Die erfindungsgemäße Lösung liegt in den Merkmalen der unabhängigen Ansprüche. Vorteilhafte Weiterbildungen sind Gegenstand der abhängigen Ansprüche.

Bei einem Umrichter, insbesondere Windenergieanlagen mit einem über einen Windrotor angetriebenen Generator, zum Einspeisen elektrischer Leistung in ein Netz, wobei der Umrichter einen Steuereingang für einen Phasenwinkel der an das Netz abgegebenen elektrischen Leistung aufweist, ist gemäß der Erfindung eine Phasenstelleinrichtung vorgesehen, die einen Netzfehlerdetektor, einen Phasenwinkeldetektor und einen Sollwinkelgenerator aufweist, wobei letzterer ein Signalverarbeitungsmodul aufweist, das dazu ausgebildet ist, bei Netzfehler aus dem Phasenfehler-Signal des Phasenwinkeldetektors ein Signal für einen Vorgabewinkel des Umrichters zu bestimmen, das über eine Steuerleitung an den Steuereingang des Umrichters angelegt ist.

Kern der Erfindung ist der Gedanke, die zu der Netzstörung führende Änderung der Phasenlage zu erfassen und zur Grundlage für eine Phasenwinkelsteuerung des Umrichters zu machen. Das Auftreten der Störung wird mittels des Netzfehlerdetektors ermittelt, um bei erkannter Störung ein Phasenfehlersignal mittels des Phasenwinkeldetektors aus der Phasenlage im Netz vor und nach Eintritt der Störung zu bestimmen. Mittels des Signalverarbeitungsmoduls wird basierend auf der Phasendifferenz ein Winkel bestimmt, der vorzugsweise so berechnet ist, dass es bei Ende der Netzstörung und rückspringender Phase zu keiner oder einer möglichst geringen Änderung der Wirkleistungseinspeisung kommt. Dieser Winkel wird als Vorgabewinkel an den Steuereingang des Umrichters angelegt.

Herkömmlicherweise wird bei Eintritt einer Netzstörung eine Änderung der Phase nur verzögert erkannt, und zwar insbesondere dann, wenn sie sprungartig erfolgt. Wird die geänderte Phase nicht sogleich berücksichtigt, speist der Umrichter mit falscher Phasenlage in das Netz. Am Umrichter vorgesehene Wirkstrom- und Blindstromregler können aber nur mit korrekter Phasenlage richtig arbeiten. Stimmt die Phasenlage nicht, kann nur weniger Wirkstrom als vorgesehen in das Netz eingespeist werden, wobei es sogar dazu kommen kann, dass Wirkstrom parasitär aus dem Netz bezogen wird anstatt einzuspeisen. Als Folge der zu geringen Einspeisung (beziehungsweise des parasitären Bezugs) steigt das Energieniveau im Zwischenkreis des Umrichters an, wodurch es zu Überspannung beziehungsweise zu Überstrom im Zwischenkreis kommt. Diese haben eine Aktivierung der Schutzeinrichtungen zur Folge, wie das Zünden der Crowbar mit den eingangs geschilderten negativen Auswirkungen auf den Antriebsstrang und den Generator.

Die Erfindung hat nun erkannt, dass mit einer gezielten Vorgabe des Phasenwinkels die schädlichen Auswirkungen der am Ende der Störung rückspringenden Phase auf den Umrichter und seine Regelung, insbesondere seine Wirkstromregelung, minimiert werden können. Der Vorgabewinkel kann so gewählt werden, dass bei einem Rücksprung um einen bestimmten Winkelbetrag die Wirkleistungsabgabe unverändert bleibt. Entsteht beispielsweise als Folge der Netzstörung ein Phasensprung um +25 Grad, so wird der Vorgabewinkel des Umrichters auf einen Wert von +12,5 Grad gestellt; dadurch wird erreicht, dass am Ende der Netzstörung bei einem Phasenrücksprung von wiederum 25 Grad der Phasenwinkel des Umrichters bezogen auf das Netz einen Wert von -12,5 Grad aufweist, die Wirkleistung also konstant bleibt. Dazu weist das Verarbeitungsmodul zweckmäßigerweise ein Vorhaltemodul auf, das dazu ausgebildet ist, aus dem Phasenfehler-Signal einen Vorhaltewinkel zu bestimmen.

Zweckmäßigerweise ist das Vorhaltemodul als ein Teiler ausgebildet, und zwar vorzugsweise mit einem Divisor von 2. Dies beruht auf der Erkenntnis, dass häufig am Ende der Netzstörung mit einem Rücksprung der Phase um einen solchen Winkelbetrag zu rechnen ist, der dem Betrag des bei Beginn der Störung auftretenden Phasensprungs entspricht. Es ist dann zwecksmäßig, den Vorgabewinkel halb so groß zu wählen, wie den anfänglich aufgetretenen Phasensprung. Dies kann mit einem Teiler durch 2 auf einfache und zweckmäßige Weise realisiert sein.

Vorzugsweise ist zusätzlich ein Kennlinienglied vorgesehen, das den Vorhaltewinkel auf einstellbare Grenzwerte limitiert. Damit kann Beschränkungen der Windenergieanlage und ihres Umrichters hinsichtlich der möglichen Phasenwinkel Rechnung getragen werden. Insbesondere hat es sich bewährt, als Grenzwerte diejenigen Winkel vorzusehen, welche dem maximalen Betrag der Scheinleistung des Umrichters entsprechen. Weiter kann vorgesehen sein, dass das Kennlinienglied mit einem Speicher für zulässige Wirk- und Blindleistungsbereiche versehen ist, aus dem die Grenzwerte dynamisch in Abhängigkeit von der jeweiligen Leistung abrufbar sind. Damit ist es ermöglicht, die jeweiligen Grenzwerte an die aktuelle Leistungssituation des Umrichters beziehungsweise seiner Windenergieanlage anzupassen.

Der Phasenwinkeldetektor kann mit einem Musterwellengenerator versehen sein, der auf die Netzfrequenz synchronisiert ist. Damit ist es ermöglicht, auch bei verrauschter Netzfrequenz eine saubere Phasenkurve zu erhalten, auf deren Basis der Phasensprung genauer bestimmt werden kann. Die Genauigkeit und die Schnelligkeit der Bestimmung des Phasenfehler-Signals erhöhen sich dadurch. Zweckmäßig ist eine Ausführung des Musterwellengenerators als eine PLL-Schaltung. Sie ermöglicht eine saubere Erfassung auch bei sich quasistationär ändernder Netzfrequenz.

Gemäß einer besonders vorteilhaften Ausführungsform, die gegebenenfalls unabhängigen Schutz verdient, weist der Netzfehlerdetektor eine Einrichtung zum Erkennen der Wiederkehr der Netzspannung und eine Umschalteinrichtung auf, die an den Steuereingang des Umrichters angeschlossen und dazu ausgebildet ist, bei Wiederkehr ein Referenzfrequenzsignal an den Steuereingang anzulegen. Damit ist es ermöglicht, bei Wiederkehr der Netzspannung am Umrichter wieder eine solche Phasenlage einzustellen, wie sie vor Auftreten der Störung geherrscht hat. Damit steht in all den Fällen, in denen die Netzphase am Ende der Störung wieder den ursprünglichen Wert vor der Störung annimmt, sofort bei Spannungswiederkehr die richtige Phäsenlage zur Verfügung. Dies gilt auch dann, wenn die Phase nicht exakt wieder zurückspringt, sondern ein geringer Phasenfehler verbleibt. Der Umrichter kann dann ohne weitere Verzögerung mit maximaler Wirkleistung in das Netz einspeisen.

Meistens wird es so sein, dass das Referenzfrequenzsignal synchron zu der ursprünglichen Netzspannung ist. Jedoch kann vorgesehen sein, dass das Referenzfrequenzsignal von ihr abweicht. Dies gilt insbesondere in Bezug auf die Phase. So kann die Phase des Referenzfrequenzsignals einen Offset zum Induktiven aufweisen. Da beim Wiederaufbau der Spannung häufig ein induktiver Phasenwinkel vorliegt, wird ein Aufschalten des Umrichters bei Spannungswiederkehr erleichtert.
Vorzugsweise weist der Umrichter eine Sicherungseinheit auf, die dazu ausgebildet ist, die Phasenwinkeldifferenz zwischen Netz und dem netzseitigen Wechselrichter vor und nach Netzspannungswiederkehr zu bestimmen und bei steigender Phasenwinkeldifferenz den netzseitigen Wechselrichter abzuschalten. Damit wird erreicht, dass sich im Fall einer bei Netzspannungswiederkehr vergrößernden Phasendifferenz der netzseitige Wechselrichter des Umrichters abgeschaltet werden kann. Damit wird auch bei ungünstigem Störungsverlauf ein maximaler Schutz der Komponenten des Umrichters erreicht.

Vorzugsweise ist als Generator des Referenzfrequenzsignals eine PLL-Schaltung mit einer Freilaufeinrichtung vorgesehen, die auf die Netzfrequenz geschaltet ist und bei Netzfehler mittels der Freilaufeinrichtung abgekoppelt wird. Damit kann auf einfache Weise das Referenzfrequenzsignal aus der Netzfrequenz generiert werden, und auch über die Zeitdauer eines Netzfehlers hin bewahrt werden.

Die Erfindung betrifft ferner eine Windenergieanlage mit einem Umrichter wie vorstehend beschrieben zur Einspeisung elektrischer Leistung in ein Netz. Ferner bezieht sich die Erfindung auf ein entsprechendes Verfahren zum Betreiben des Umrichters. Zur näheren Erläuterung wird auf vorstehende Ausführungen verwiesen.

Die Erfindung wird nachfolgend unter Bezugnahme auf die beigefügte Zeichnung beschrieben, in der vorteilhafte Ausführungsbeispiele dargestellt sind. Es zeigen:
- Fig. 1: eine schematische Übersichtsdarstellung einer an ein elektrisches Versorgungsnetz angeschlossenen Windenergieanlage;
- Fig. 2: eine Schaltungsansicht eines Umrichters gemäß einem ersten Ausführungsbeispiel für die in Fig. 1 dargestellte Windenergieanlage;
- Fig. 3: eine Teil-Schaltungsansicht einer Variation für ein zweites Ausführungsbeispiel;
- Fig. 4: ein Diagramm mit einer Darstellung der Phasenlage während einer Netzstörung;
- Fig. 5: ein Diagramm mit Winkelfehlern während der Netzstörung gemäß Fig. 4; und
- Fig. 6: ein Leistungsdiagramm mit Wirk- und Blindanteil.

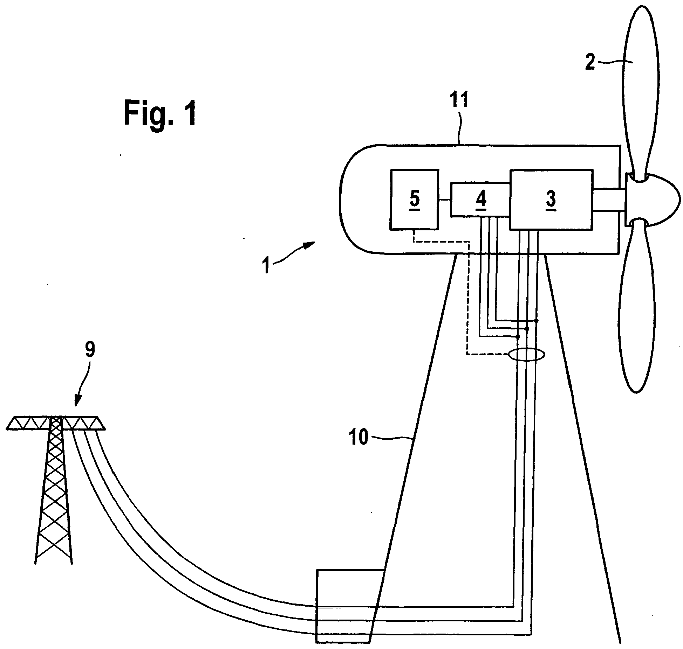

Eine einen erfindungsgemäß ausgebildeten Umrichter aufweisende Windenergieanlage ist schematisiert in Fig. 1 dargestellt. Sie ist in ihrer Gesamtheit mit der Bezugsziffer 1 versehen. Sie weist in an sich bekannter und daher nicht näher zu erläuternder Weise eine auf einem Turm 10 drehbar angeordnete Gondel 11 auf. An deren Stirnseite ist ein Windrotor 2 drehbar angeordnet. Er treibt über eine Rotorwelle einen Generator 3 an. Dieser kann insbesondere als Synchronmaschine, Asynchronmaschine (jeweils über einen Umrichter mit dem Netz gekoppelt), vorzugsweise aber als doppelt gespeiste Asynchronmaschine ausgeführt sein. Ein Stator des Generators 3 ist direkt oder über einen Transformator (nicht dargestellt) mit einer dreiphasigen Anschlussleitung an ein Netz 9 der Windkraftanlage 1 verbunden. Ein Rotor (nicht dargestellt) des Generators 3 ist mit einem generatorseitigen Ende eines Umrichters 4 verbunden, dessen anderes netzseitiges Ende an das Netz 9 angeschlossen ist. Ferner ist eine Steuerung 5 für den Betrieb des Umrichters 4 vorgesehen.

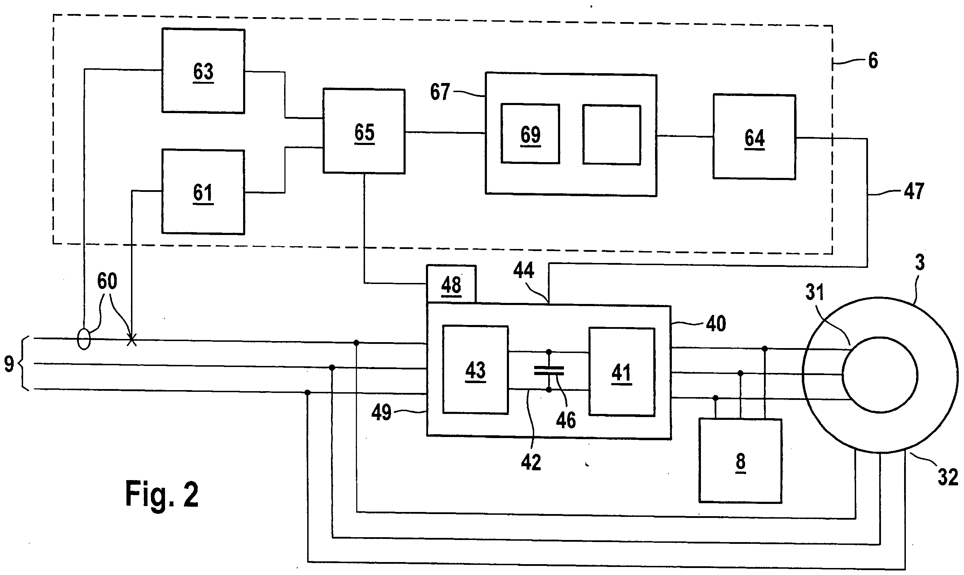

Aufbau und Funktionsweise des Umrichters 4 seien anhand des Beispiels der Windenergieanlage erläutert. Die Erfindung kann auch bei anderen Arten von Erzeugern für elektrische Energie Verwendung finden, die einen Umrichter zur Einspeisung der elektrischen Leistung in das Netz vorsehen. Der Umrichter 4 dient primär dazu, von dem drehzahlvariabel angetriebenen Generator 3 erzeugte elektrische Leistung mit variabler Frequenz so umzuwandeln, dass sie in passender Frequenz an ein festfrequentes Versorgungsnetz 9 abgegeben werden kann. In Fig. 2 dargestellt ist der Anwendungsfall, bei dem der Umrichter 4 an einen doppelt gespeisten Asynchrongenerator 3 angeschlossen ist. An ein generatorseitiges Ende 40 des Umrichters 4 ist ein Rotor 31 des doppelt gespeisten Asynchrongenerators 3 angeschlossen. An ein netzseitiges Ende 49 ist das Versorgungsnetz 9 angeschlossen. Der Stator 32 des Generators 3 ist direkt an das elektrische Versorgungsnetz angeschlossen.

Der Umrichter 4 weist als Hauptkomponenten einen als Gleichrichter 41 arbeitenden generatorseitigen Wechselrichter, einen netzseitigen Wechselrichter 43 sowie einen dazwischen angeordneten Zwischenkreis 42 als Verbindung auf. Der Rotor 31 des Generators 3 ist an den generatorseitigen Wechselrichter 41 angeschlossen. An dieser Stelle kann eine sogenannte Crowbar-Schaltung 8 als Überlastungsschutz angeordnet sein. Die Crowbar-Schaltung 8 ist dazu ausgebildet, den Rotor 31 kurzzuschließen und damit das Auftreten schädlicher Überspannung zu verhindern. Aufbau und Funktionsweise der Crowbar-Schaltung 8 sind aus dem Stand der Technik bekannt und brauchen daher nicht näher erläutert zu werden. Der generatorseitige Wechselrichter 41 bewirkt eine Vollwegegleichrichtung für den von dem Rotor 31 eingespeisten Drehstrom. Der Zwischenkreis 42 ist als Gleichspannungszwischenkreis ausgeführt. Er weist einen Kondensator 46 als Energiespeicher auf. Der netzseitige Wechselrichter 43 weist sechs steuerbare Schaltelemente, vorzugsweise IGBT, in Vollbrückenanordnung auf. Die IGBT werden in an sich bekannter Weise so von der Steuerung 5 des Umrichters betätigt, dass ein Drehstrom mit einstellbarer Frequenz und Phasenlage erzeugt wird. Frequenz und Phasenlage werden hierbei von der Steuerung 5 derart vorgegeben, dass sie mit derjenigen des Versorgungsnetzes 9 übereinstimmen. Zusätzlich ist ein Steuereingang 44 zur externen Vorgabe des Phasenwinkels über eine Steuerleitung 47 vorgesehen.

Das Versorgungsnetz 9 ist an den von dem netzseitigen Wechselrichter 43 gespeisten Ausgangsanschluss 49 des Umrichters 4 angeschlossen, und zwar direkt oder über einen Transformator (nicht dargestellt). Über den Umrichter 4 wird damit von dem Rotor 31 des Generators 3 erzeugte elektrische Energie in das Versorgungsnetz 9 eingespeist (je nach Betriebspunkt des Generators 3 kann der Leistungsfluss auch umgekehrt sein).

An dem elektrischen Versorgungsnetz ist ein Aufnehmerpaar 60 für die Phasenlage der Spannung und Strom im Versorgungsnetz 9 angeordnet. Aus Gründen der Übersichtlichkeit ist das Aufnehmerpaar 60 an nur einer Phase dargestellt; die übrigen Phasen sind entsprechend ausgerüstet. Das Aufnehmerpaar 60 erzeugt ein Eingangssignal für eine Phasenstelleinrichtung 6, die nachfolgend näher erläutert wird. Die Phasenstelleinrichtung 6 umfasst einen Phasenwinkeldetektor 61, einen Netzfehlerdetektor 63, eine Winkelfehlerberechnungseinheit 65 und ein Signalverarbeitungsmodul 67, an dessen Ausgang ein Vorgabewert für den Phasenwinkel des Umrichters 4 ausgegeben wird. Der Ausgang ist über eine Steuerleitung 47 mit dem Steuereingang 44 des Umrichters 4 verbunden. Das Signalverarbeitungsmodul 67 enthält ein als Teiler 69 ausgeführtes Vorhaltemodul. Der Teiler 69 ist dazu ausgebildet, den von dem Winkelfehlermodul 65 gelieferten Winkelwert zu halbieren, und als Vorhaltewinkel über die Steuerleitung 47 auszugeben.

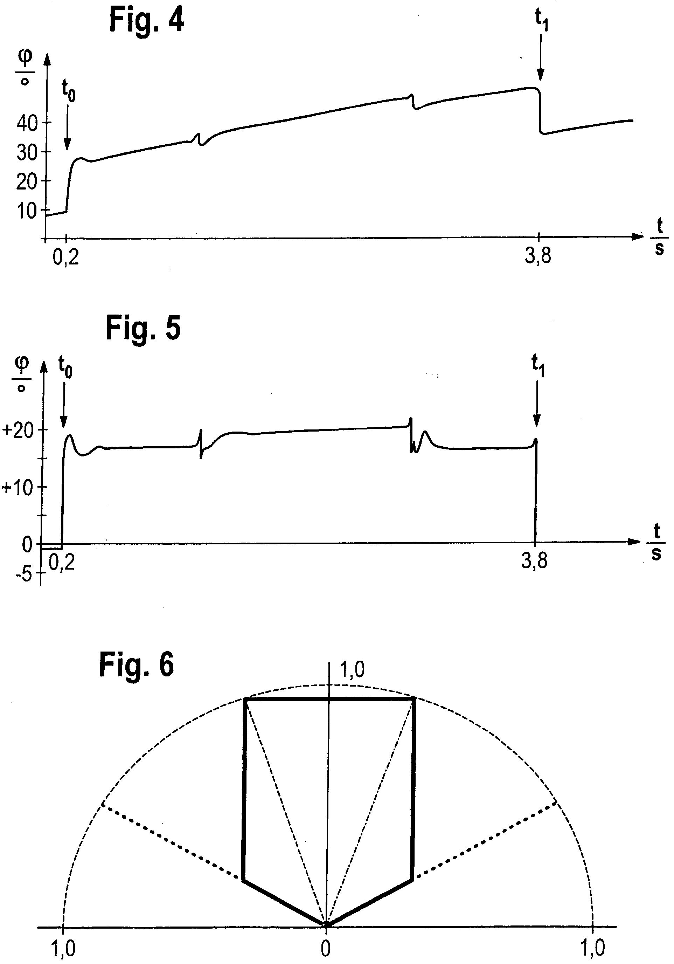

Die Funktionsweise wird nachfolgend unter zusätzlicher Bezugnahme auf die Fig. 4 und 5 näher erläutert. Es sei angenommen, dass es zu einer Netzstörung aufgrund einer Änderung der Phasenlage der Spannung komme. Eintritt der Störung sei zum Zeitpunkt t = t₀ = 0,2 sek. Zu diesem Zeitpunkt springt der Phasenwinkel um einen Betrag von etwa 17 Grad nach induktiv. Der Eintritt der Störung wird durch den Netzfehlerdetektor 63 ermittelt, und gleichzeitig wird durch den Phasenwinkeldetektor 61 der absolute Phasensprung ermittelt. Unter Berücksichtigung der aktuellen Netzfrequenz werden durch das Winkelfehlermodul 65 die von dem Phasenwinkeldetektor 61 ermittelten Winkeldaten mit der Netzfrequenz korrigiert, und der Anfangswinkel auf 0 Grad gesetzt. Damit ergibt sich eine für das nachfolgende Signalverarbeitungsmodul 67 auswertbare, in Fig. 5 dargestellte Darstellung des Netzwinkels. Wie man aus der Darstellung in Fig. 5 leicht erkennt, beträgt der auf die Netzfrequenz korrigierte Winkelfehler der Phase 17 Grad. Dieser Wert wird als Phasenfehler-Signal an das Signalverarbeitungsmodul 67 angelegt. Mittels des Teilers 69 wird daraus ein Vorhaltewinkel von 8,5 Grad ermittelt. Dieser Vorhaltewinkel wird am Ausgang des Signalverarbeitungsmoduls 67 ausgegeben, und über ein Kennlinienglied 64 zur Größenbegrenzung und die Steuerleitung 47 an den Steuereingang 44 des Umrichters 4 angelegt. Dieser stellt einen Steuerwinkel von 8,5 Grad induktiv an dem Umrichter ein. Damit ergibt sich ein Betriebspunkt, der auf der in Fig. 6 gestrichelt dargestellten Gerade liegt. Diese Einstellung des Umrichters 4 ist in dem Sinne optimal, dass bei einem Rücksprung der Phase am Ende der Netzstörung (siehe t = 3,8 sek. in Fig. 4 und 5) sich eine Winkeländerung am Umrichter in Höhe von 17 Grad in Richtung kapazitiv ergibt, was ausgehend von besagtem Phasenfehler von 8,5 Grad induktiv zu einem neuen Phasenwinkel von 8,5 Grad kapazitiv führt, wie durch die strichpunktierte Linie in Fig. 6 dargestellt ist. Die Wirkleistungsabgabe, die durch die horizontale durchgezogene Linie in Fig. 6 symbolisiert ist, ändert sich durch die symmetrisch zur Wirkleistungsachse erfolgende Änderung der Phasenlage nicht. Da somit die Wirkleistungsabgabe des Umrichters 4 an das Netz 9 unverändert bleibt, bleibt als Folge auch die Spannung im Zwischenkreis 42 des Umrichters stabil. Die bei Umrichtern gemäß dem Stand der Technik in dieser Situation häufig auftretende Entgleisung der Wirkleistungsregelung kann damit vermieden werden. Damit wird auch ein Zünden der Crowbar 8 zum Schutz vor schädlicher Überspannung im Zwischenkreis 42 verhindert. Dank der Erfindung speist der Umrichter 4 bei Netzspannungswiederkehr ohne Störung oder Unterbrechung weiterhin Wirkleistung in das Netz ein. Der Betrieb der Windenergieanlage kann fortgesetzt werden, ohne dass es durch ein unerwünschtes Zünden der Crowbar 8 zu Rückwirkungen auf den Generator 3 und seinen Antriebsstrang kommt.

Zweckmäßigerweise ist an dem Umrichter eine Sicherungseinheit 48 vorgesehen. Sie dient dazu, unter Nutzung der von der Phasenstelleinrichtung 6 ermittelten Winkeldaten den Verlauf der Phasenwinkeldifferenz bei wiederkehrender Netzspannung zu erfassen. Die Sicherungseinheit 48 wirkt auf den netzseitigen Wechselrichter 43, und kann diesen bei erkannter Fehlersituation abschalten. Die Sicherungseinheit 48 ist dazu ausgebildet, den netzseitigen Wechselrichter 43 dann abzuschalten, wenn sich bei Rückkehr der Netzspannung die Phasendifferenz zwischen dem netzseitigen Wechselrichter 43 und dem Netz 9 nicht verkleinert, sondern vergrößert. Damit wird auch in außergewöhnlichen Fällen ein maximaler Schutz der Komponenten erreicht.

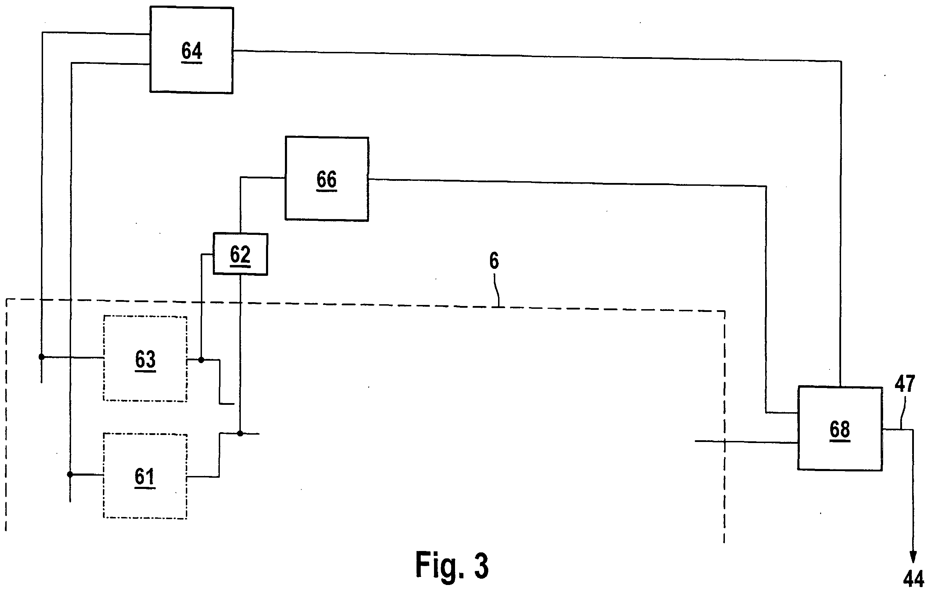

Ein zweites Ausführungsbeispiel basiert auf dem ersten Ausführungsbeispiel und ist um die in Fig. 3 dargestellten Komponenten ergänzt. Übereinstimmende Elemente sind mit denselben Bezugszeichen versehen. Auf eine erneute Erläuterung wird unter Verweis auf die vorstehend gegebene Erläuterung verzichtet. Bei dem zweiten Ausführungsbeispiel ist zusätzlich ein als Nachlaufsynchronisationsschaltung (PLL-Schaltung) 66 ausgeführter Referenzfrequenzgenerator vorgesehen. Sein Eingang ist mit einem Messwert für die Phase des Netzes 9 beaufschlagt. Die PLL-Schaltung 66 ist mit dem von dem Phasenwinkeldetektor 61 bestimmten Referenzwinkel beaufschlagt. Über eine Freilaufeinrichtung 62 wird sie bei erkanntem Netzfehler abgekoppelt und schwingt frei weiter. Weiter ist eine Einrichtung 64 zum Erkennen der Netzspannungswiederkehr vorgesehen. In dem Ausführungsbeispiel ist sie als ein Schwellwertschalter ausgeführt, der bei einem Rücksprung des Phasenwinkels oberhalb einer einstellbaren Schwelle ein Ausgangssignal für Netzwiederkehr ausgibt. Dieses ist an einen Steuereingang einer Umschalteinrichtung 68 angelegt. Wird die Umschalteinrichtung 68 betätigt, so wird das von der PLL-Schaltung 66 weitergeführte Netzfrequenzsignal durchgeschaltet und an den Steuereingang 44 des Umrichters 4 angelegt. Die Betriebsweise dieser Variante ist wie folgt. Mittels der PLL-Schaltung 66 wird der Netzwinkel während des Andauerns der Störung im Netz 9 fortgeschrieben. Erfolgt zum Ende der Störung im Netz 9 ein Rücksprung des Phasenwinkels (siehe Zeitpunkt t₁ in Fig. 5), so wird dies durch die Erkennungseinrichtung 64 erkannt. Sie gibt ein entsprechendes Stellsignal auf die Umschalteinrichtung 68 aus, wodurch das Ausgangssignal der PLL-Schaltung 66 als Steuersignal auf dem Umrichter 4 aufgeschaltet wird. Damit wird erreicht, dass sich der Umrichter 4 sofort wieder an der durch die PLL-Schaltung 66 als Referenz bereitgestellten Netzfrequenz orientieren kann. Der Umrichter 4 kann sich damit schneller wieder mit dem Netz synchronisieren, wodurch ein eventueller Einschwingvorgang deutlich verkürzt wird. Damit ist die Wirkleistungsregelung des Umrichters 4 ohne Verzögerung sofort wieder einsetzbar.

## Patentansprüche

1. Umrichter, insbesondere für Windenergieanlagen mit einem über einen Windrotor (2) angetriebenen Generator (3), zum Einspeisen elektrischer Leistung in ein Netz (9), wobei der Umrichter (4) einen Steuereingang (44) für einen Phasenwinkel der an das Netz (9) abgegebenen elektrischen Leistung aufweist, und eine Phasenstelleinrichtung vorgesehen ist, die einen Netzfehlerdetektor (63), einen Phasenwinkeldetektor (61) und ein Signalverarbeitungsmodul (67) aufweist,
**dadurch gekennzeichnet, dass**
der Phasenwinkel (61) mit dem Netzfehlerdetektor (63) derart zusammenwirkt, dass die Phasenwinkel vor und während des Netzfehlers miteinander verglicken und daraus ein Phasenfehler-Signal entsprechend einen Phasenfehler generiert wird, und das Signalverarbeitungsmodul (67) weiter ein Vorhaltemodul aufweist, das dazu ausgebildet ist, aus dem von dem Phasenwinkeldetektor (61) ermittelt Phasenfehler-Signal mittels eines Teilers (69) ein Vorhaltewinkelsignal entsprechend einem Vorhaltewinkel zu ermitteln, der als Vorgabewinkel über eine Steuerleitung (47) an den Steuereingang (44) für den Phasenwinkel der an das Netz (9) abgegebenen elektrischen Leistung des Umrichters (4) angelegt ist, wobei der Vorgabewinkel in einem verhähltnis entsprechend dem Teiler kleiner als der Phasenfehler ist.

2. Umrichter nach Anspruch 1,
**dadurch gekennzeichnet, dass**
der Teiler (69) ausgebildet ist als ein Divisor von 2.

3. Umrichter nach Anspruch 2,
**dadurch gekennzeichnet, dass**
zusätzlich ein Kennlinienglied (64) vorgesehen ist, das den Vorhaltewinkel auf einstellbare Grenzwerte limitiert.

4. Umrichter nach Anspruch 3,
**dadurch gekennzeichnet, dass**
das Kennlinienglied (64) mit einem Speicher für zulässige Wirk- und Blindleistungsbereiche versehen ist, aus dem die Grenzwerte dynamisch in Abhängigkeit von der jeweiligen Leistung abrufbar sind.

5. Umrichter nach einem der vorangehenden Ansprüche,
**dadurch gekennzeichnet, dass**
der Phasenwinkeldetektor (61) mit einem Musterwellengenerator versehen ist, der auf die Netzfrequenz synchronisiert ist.

6. Umrichter nach Anspruch 1,
**dadurch gekennzeichnet, dass**
der Netzfehlerdetektor (63) mit einer Einrichtung zum Erkennen einer Netzspannungswiederkehr (64) zusammenwirkt und eine Umschalteinrichtung (68) vorgesehen ist, die dazu ausgebildet ist, bei Netzrückkehr ein Referenzfrequenzsignal an den Steuereingang (44) des Umrichters (4) anzulegen.

7. Umrichter nach Anspruch 6,
**dadurch gekennzeichnet, dass**
das Referenzfrequenzsignal dazu ausgebildet ist, die Netzfrequenz abzubilden.

8. Umrichter nach Anspruch 6 oder 7,
**dadurch gekennzeichnet, dass**
zur Bildung des Referenzfrequenzsignals eine PLL-Schaltung (66) vorgesehen ist.

9. Umrichter nach Anspruch 8,
**dadurch gekennzeichnet, dass**
eine Freilaufeinrichtung (62) für die PLL-Schaltung (66) vorgesehen ist, die von dem Netzfehlerdetektor (63) angesteuert ist.

10. Umrichter nach einem der Ansprüche 6 bis 9,
**dadurch gekennzeichnet, dass**
eine Sicherungseinheit (48) vorgesehen ist, die dazu ausgebildet ist, die Phasenwinkeldifferenz zwischen Netz (9) und dem netzseitigen Wechselrichter (43) vor und nach Netzspannungswiederkehr zu bestimmen und bei steigender Phasenwinkeldifferenz den netzseitigen Wechselrichter (43) abzuschalten.

11. Windenergieanlage mit einem über einen Windrotor (2) angetriebenen Generator (3) und einen Umrichter (4) zum Einspeisen elektrischer Leistung in ein Netz (9), wobei der Umrichter einen Steuereingang (44) für einen Phasenwinkel der an das Netz (9) abgegebenen elektrischen Leistung aufweist, und eine Phasenstelleinrichtung vorgesehen ist, die einen Netzfehlerdetektor (63), einen Phasenwinkeldetektor (61) und ein Signalverarbeitungsmodul (67) aufweist,
**dadurch gekennzeichnet, dass**
der Phasenwinkeldetektor (61) mit dem Netzfehlerdetektor (63) derart zusammenwirkt, dass die Phasenwinkel vor und während des Netzfehlers miteinander verglichen und daraus ein Phasenfehler-Signal entsprechend einem Phasenfehler generiert wird, und das Signalverarbeitungsmodul (67) weiter ein Vorhaltemodul aufweist, das dazu ausgebildet ist, aus dem von dem Phasenwinkeldetektor (61) ermittelten Phasenfehler-Signal mittels eines Teilers (69) ein Vorhaltewinkelsignal entsprechend einem Vorhaltewinkel zu ermitteln, der als Vorgabewinkel über eine Steuerleitung (47) an den Steuereingang (44) für den Phasenwinkel der an das Netz (9) abgegebenen elektrischen Leistung des Umrichters (4) angelegt ist, wobei der Vorgabewinkel in einem verhähltnis entsprechend dem Teiler kleiner als der Phasenfehler ist.

12. Verfahren zum Betreiben eines Umrichters, insbesondere für Windenergieanlagen mit einem über einen Windrotor (2) angetriebenen Generator (3), zum Einspeisen elektrischer Leistung in ein Netz (9), wobei ein Steuersignal für einen Phasenwinkel der an das Netz abzugebenden elektrischen Leistung an einen Steuereingang (44) des Umrichters (4) angelegt wird und eine NetzfehlerErkennung durchgeführt wird,
**gekennzeichnet durch**,
Ermitteln eines Phasenwinkelwinkelfehlers bei gestörtem Netz, Vergleichen dieses Phasenwinkels mit dem Phasenwinkel vor dem Netzfehler, Generieren eines Phasenfehler-Signals daraus und Bestimmen eines Vorhaltewinkels für den Umrichter (4) aus dem ermittelten Phasenfehlersignal mittels eines Teilers, und Anlegen des Vorhaltewinkels als Vorgabewinkel an den Steuereingang (44) für den Phasenwinkel der an das Netz (9) abgegebenen elektrischen Leistung des Umrichters (4), wobei der Vorgabewinkel in einem Verhältnis entsprechend dem Teiler kleiner als der Phasenfehler ist.

## Claims

1. Converter, in particular for wind energy installations having a generator (3) which is driven via a wind rotor (2), for feeding electrical power into a network (9), with the converter (4) having a control input (44) for a phase angle of the electrical power which is emitted to the network (9), and a phase control device being provided, which has a network fault detector (63), a phase angle detector (61) and a signal processing module (67),
**characterized in that**
the phase angle (61) interacts with the network fault detector (63) in such a way that the phase angles before and during the network fault are compared with one another and a phase error signal corresponding to a phase error is generated therefrom, and the signal processing module (67) furthermore has a lead module which is designed to determine a lead angle signal corresponding to a lead angle from the phase error signal which is determined by the phase angle detector (61), by means of a divider (69), said lead angle being applied as a preset angle via a control line (47) to the control input (44) for the phase angle of the electrical power of the converter (4) which is emitted to the network (9), the preset angle being less than the phase error in a ratio corresponding to the divider.

2. Converter according to Claim 1,
**characterized in that**
the divider (69), is in the form of a divisor of 2.

3. Converter according to Claim 2,
**characterized in that**
a characteristic element (64) is additionally provided, and limits the lead angle to adjustable limit values.

4. Converter according to Claim 3,
**characterized in that**
the characteristic element (64) is provided with a memory for permissible power and wattless-component ranges, from which the limit values can be called up dynamically as a function of the respective power.

5. Converter according to one of the preceding claims,
**characterized in that**
the phase angle detector (61) is provided with a pattern wave generator which is synchronized to the network frequency.

6. Converter according to Claim 1,
**characterized in that**
the network fault detector (63) interacts with a device for identification of network voltage return (64), and a switching device (68) is provided, which is designed to apply a reference frequency signal to the control input (44) of the converter (4) when the network returns.

7. Converter according to Claim 6,
**characterized in that**
the reference frequency signal is designed to map the network frequency.

8. Converter according to Claim 6 or 7,
**characterized in that**
a PLL circuit (66) is provided in order to form the reference frequency signal.

9. Converter according to Claim 8,
**characterized in that**
a freewheeling device (62) is provided for the PLL circuit (66), and is driven by the network fault detector (63).

10. The converter according to one of Claims 6 to 9,
**characterized in that**
a protection unit (48) is provided and is designed to determine the phase angle difference between the network (9) and the network-side inverter (43) before and after the network voltage returns, and to switch off the network-side inverter (43) if the phase angle difference increases.

11. Wind energy installation having a generator (3) which is driven via a wind rotor (2), and a converter (4) for feeding electrical power into a network (9), with the converter having a control input (44) for a phase angle of the electrical power which is emitted to the network (9), and a phase control device being provided, which has a network fault detector (63), a phase angle detector (61) and a signal processing module (67),
**characterized in that**
the phase angle detector (61) interacts with the network fault detector (63) in such a way that the phase angles before and during the network fault are compared with one another and a phase error signal corresponding to a phase error is generated therefrom, and the signal processing module (67) furthermore has a lead module which is designed to determine a lead angle signal corresponding to a lead angle from the phase error signal which is determined by the phase angle detector (61), by means of a divider (69), said lead angle being applied as a preset angle via a control line (47) to the control input (44) for the phase angle of the electrical power of the converter (4) which is emitted to the network (9), the preset angle being less than the phase error in a ratio corresponding to the divider.

12. Method for operation of a converter, in particular for wind energy installations having a generator (3) which is driven via a wind rotor (2), for feeding electrical power into a network (9), with a control signal for a phase angle of the electrical power which is to be emitted to the network being applied to a control input (44) of the converter (4), and an identification of a network fault being carried out,
**characterized by**
determination of a phase angle error when the network is faulty, comparison of said phase angle with the phase angle before the network fault, generation of a phase error signal therefrom and determination of a lead angle for the converter (4) from the determined phase error signal by means of a divider, and application of the lead angle as preset angle to the control input (44) for the phase angle of the electrical power of the converter (4) which is emitted to the network (9), the preset angle being less than the phase error in a ratio corresponding to the divider.

## Revendications

1. Convertisseur, plus particulièrement pour des installations d'éoliennes avec un générateur (3) entraîné par l'intermédiaire d'un rotor d'éolienne (2), pour l'alimentation en énergie électrique d'un réseau (9), le convertisseur (4) comprenant une entrée de commande (44) pour un angle de phase de l'énergie électrique injectée dans le réseau (9), et un dispositif de réglage de phase étant prévu, qui comprend un détecteur d'erreur de réseau (63), un détecteur d'angle de phase (61) et un module de traitement de signaux (67),
**caractérisé en ce que**
l'angle de phase (61) interagit avec le détecteur d'erreur de réseau (63) de façon à ce que les angles de phases avant et pendant l'erreur de réseau soient comparés entre eux et un signal d'erreur de phase, correspondant à une erreur de phase, est généré en conséquence et le module de traitement de signaux (67) comprend en outre un module de prévision qui est conçu pour déterminer, à partir du signal d'erreur de phase déterminé par le détecteur d'angle de phase (61), au moyen d'un diviseur (69), un signal d'angle prévisionnel correspondant à un angle prévisionnel, qui est appliqué en tant qu'angle de consigne, par l'intermédiaire d'une ligne de commande (47), à l'entrée de commande (44), pour l'angle de phase de l'énergie électrique du convertisseur (4) injectée dans le réseau (9), l'angle de consigne étant inférieur à l'erreur de phase, dans un rapport correspondant au diviseur.

2. Convertisseur selon la revendication 1,
**caractérisé en ce que**
le diviseur (69) est conçu comme un diviseur par 2.

3. Convertisseur selon la revendication 2,
**caractérisé en ce que**
en outre, un élément de courbe caractéristique (64) est prévu, qui limite l'angle prévisionnel à des valeurs limites réglables.

4. Convertisseur selon la revendication 2,
**caractérisé en ce que**
l'élément de courbe caractéristique (64) est muni d'une mémoire pour des plages admissibles de puissance active et de puissance réactive, à partir de laquelle les valeurs limites peuvent être appelées en fonction de la puissance correspondante.

5. Convertisseur selon l'une des revendications précédentes,
**caractérisé en ce que**
le détecteur d'angle de phase (61) est munie d'un générateur d'ondes modèles qui est synchronisé avec la fréquence du réseau.

6. Convertisseur selon la revendication 1,
**caractérisé en ce que**
le détecteur d'erreur de réseau (63) interagit avec un dispositif de détection d'un retour de tension de réseau (64) et un dispositif de commutation (68) est prévu, qui est conçu pour appliquer un signal de fréquence de référence à l'entrée de commande (44) du convertisseur (4) lors d'un retour du réseau.

7. Convertisseur selon la revendication 6,
**caractérisé en ce que**
le signal de fréquence de référence est conçu pour reproduire la fréquence du réseau.

8. Convertisseur selon la revendication 6 ou 7,
**caractérisé en ce que**
pour la formation du signal de fréquence de référence, un circuit PLL (66) est prévu.

9. Convertisseur selon la revendication 8,
**caractérisé en ce que**
un dispositif de roue libre (62) est prévu pour le circuit PLL (66), qui est commandé par le détecteur d'erreur de réseau (63).

10. Convertisseur selon l'une des revendication 6 à 9,
**caractérisé en ce que**
une unité de sécurisation (48) est prévue, qui est conçue pour déterminer la différence d'angle de phase entre le réseau (9) et le convertisseur côté réseau (43) avant et après le retour de tension de réseau et, dans le cas d'une différence d'angle de phase en augmentation, pour arrêter le convertisseur côté réseau (43).

11. Installation d'éolienne avec un générateur (3) entraîné par l'intermédiaire d'un rotor d'éolienne (2) et qui comprend un convertisseur (4) pour l'alimentation d'un réseau (9) en énergie électrique, le convertisseur comprenant une entrée de commande (44) pour un angle de phase de l'énergie électrique injectée dans le réseau (9), et un dispositif de réglage de phase est prévu, qui comprend un détecteur d'erreur de réseau (63), un détecteur d'angle de phase (61) et un module de traitement de signaux (67),
**caractérisé en ce que**
le détecteur d'angle de phase (61) interagit avec le détecteur d'erreur de réseau (63) de façon à ce que les angles de phase avant et pendant l'erreur de réseau soient comparés entre eux et un signal d'erreur de phase, correspondant à une erreur de phase, est généré en conséquence et le module de traitement de signaux (67) comprend en outre un module de prévision qui est conçu pour déterminer, à partir du signal d'erreur de phase déterminé par le détecteur d'angle de phase (61), au moyen d'un diviseur (69), un signal d'angle prévisionnel correspondant à un angle prévisionnel, qui est appliqué en tant qu'angle de consigne, par l'intermédiaire d'une ligne de commande (47), à l'entrée de commande (44), pour l'angle de phase de l'énergie électrique du convertisseur (4) injectée dans le réseau (9), l'angle de consigne étant inférieur à l'erreur de phase, dans un rapport correspondant au diviseur.

12. Procédé d'exploitation d'un convertisseur, plus particulièrement pour des installations d'éoliennes avec un générateur (3) entraîné par l'intermédiaire d'un rotor d'éolienne (2), pour l'alimentation en énergie électrique d'un réseau (9), un signal de commande pour un angle de phase de l'énergie électrique injectée dans le réseau étant appliqué à une entrée de commande (44) du convertisseur (4) et une détection d'erreur de réseau est effectuée,
**caractérisé par**
la détermination d'une erreur d'angle de phase dans le cas d'une perturbation du réseau, la comparaison de cet angle de phase avec l'angle de phase avant l'erreur de réseau, la génération d'un signal d'erreur de phase en conséquence et la détermination d'un angle prévisionnel pour le convertisseur (4) à partir du signal d'erreur de phase déterminé au moyen d'un diviseur et l'application de l'angle prévisionnel en tant qu'angle de consigne au niveau de l'entrée de commande (44) pour l'angle de phase de l'énergie électrique du convertisseur (4) injectée dans le réseau (9), l'angle de consigne étant inférieur à l'erreur de phase, dans un rapport correspondant au diviseur.
